# EUROPEAN PATENT APPLICATION

(11) **EP 3 904 138 A1**
(43) Date of publication of application: **03.11.2021**
(21) Application number: 21171477.9
(22) Date of filing: 30.04.2021
(51) Int. Cl.: B60K 6/20, B60W 10/06, B60W 10/08, B60W 10/26, B60W 20/13, B60W 20/40, B60W 40/105, B60W 40/13, B60W 50/08, B60W 50/14

(54) **TRANSMISSION SWITCHING MECHANISM FOR A HYBRID VEHICLE**

(30) Priority: 02.05.2020 IN 202041018848
(71) Applicant: InnovMon Technologies Pvt Ltd, 560099 Bangalore Karnataka (IN)
(72) Inventor: AMARNATH, RAKESH KHATOKAR, 570022 Mysore (IN); PRATIWADIBHAYAMKARAM, ASHWINI KUMAR KRISHNASWAMY, 560099 Bangalore (IN); RAVICHANDRA, RAVICHANDRA, 570017 Mysore (IN); AMARNATH, NITESH KHATOKAR, 570022 Mysore (IN)
(74) Representative: Lapienis, Juozas

(57) **Abstract**

Provided is a switching mechanism to alternate between transmission from an internal combustion engine and transmission from an electric motor. The switching mechanism maybe selected by means of a single pole three throw switch (1). The switching mechanism is capable of being fitted to any size of hybrid vehicle like a two-wheeler, three-wheeler, four-wheeler and the like. The single pole three throw switch (1) has marking position "I" called the internal combustion engine transmission, "EP" called the electric power transmission and "AUTO" for automatic switching transmission. The single pole three throw switch (1) transmits to an onboard microcontroller (2) signals to switch from electric motor to internal combustion engine for propulsion or vice versa. Based upon the signal transmitted by the single pole three throw switch (1), the onboard microcontroller (2) actuates a first actuator (3) or a second actuator (5), wherein the first actuator (3) ignites a spark plug (4) in order to use the internal combustion engine for propulsion and wherein the second actuator (5) switches on a power supply to use electric motor propulsion. In an automated operation system a battery voltage sensor (6), a battery current sensor (7), a tilt sensor (8) and a fuel level sensor (9) are provided. In the "AUTO" set point of the single pole three throw switch (1) the battery voltage sensor (6) and current sensor (7) transmit the battery status. The tilt sensor (8) checks gradients in the road and the level sensor (9) checks the fuel level in the hybrid vehicle. All these sensors dynamically transmit the status respectively to the onboard microcontroller (2). The onboard microcontroller (2) with embedded neural algorithm makes a smart decision to choose between internal combustion engine and electric motor for propulsion.

## Description

### FIELD OF INVENTION

The present invention provides a smart switching mechanism for a hybrid two-wheeler. Particularly the hybrid vehicle consist of an internal combustion engine(ICE) and electric motor for propelling the vehicle. More particularly the invention provides a manual and smart automated switching mechanism between Internal combustion engine and electric motor in hybrid vehicle. Still more particularly there is an alarm to alert the driver regarding the low status of the fuel.

### BACKGROUND OF INVENTION

One of the greatest inventions of mankind is internal combustion engine transportation . The conventional vehicles with ICE provide a good performance and long operating range. However, they have caused and continue to cause serious problems for poor fuel economy, environment pollution and human life. Reducing fuel consumption and emissions is of paramount importance. The hybridization of a convectional combustion engine vehicle with an advanced electric motor drive may greatly enhance the overall efficiency and achieve higher fuel conservation thereby resulting in reduced emissions.

### OBJECTIVES

Principal objective of the present invention is to provide a hassle-free journey to the commuters who use hybrid two-wheeler for commuting.

Another objective of the invention is to provide a manual switching between internal combustion engine and electric motor while driving without halting or pausing.

Still another objective of the invention is to provide automated switching between internal combustion engine and electric motor while driving.

Yet another objective of the invention is to adapt the best suitable device to propel the hybrid vehicle by monitoring the road condition and driving behaviour nature of the driver in order to increase the efficiency of ICE and Electric motor thereby reducing emissions.

Yet another objective of the invention is to provide alert signals to the driver when the vehicle is running low on fuel and battery.

### DESCRIPTION OF THE DRAWINGS

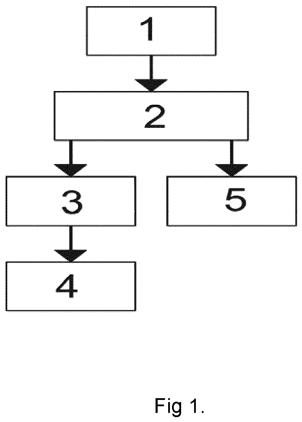

Fig 1 shows an embodiment of switching mechanisms for an integrated internal combustion engine and electric motor in a hybrid vehicle wherein (1) is a single pole three throw switch (2), is an on board microcontroller (3),is a first actuator to ignite the internal combustion engine (4), is a spark plug (5), is a second actuator.

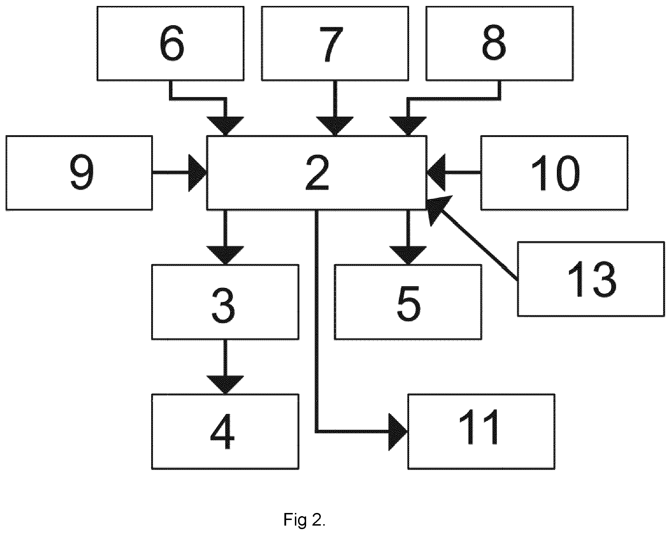

Fig 2 shows an embodiment of the invention showing of an automated switching mechanism for an integrated internal combustion engine and electric motor in a hybrid vehicle wherein (6) is a voltage sensor, (7) is a current sensor, (8) is a tilt sensor, (9) is a Fuel level sensor (10) is a Load or weight sensor (11) is an alarm and (13) is a driving pattern monitor sensor.

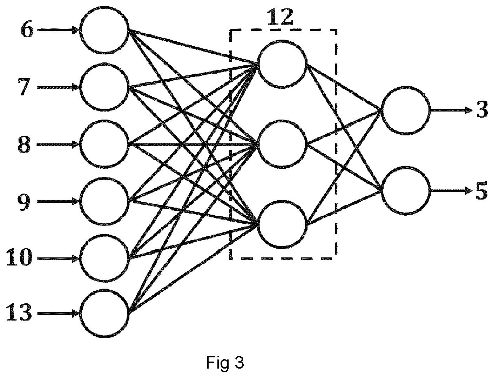

Fig 3 shows an embodiment of the invention showing an algorithm of switching mechanisms for an integrated internal combustion engine and electric motor in a hybrid vehicle wherein (6) is a voltage sensor input, (7) is a current sensor input, (8) is a tilt sensor input, (9) is a Fuel level sensor input (10) is a Load or weight sensor input (12) is a computation block and (13) is a Driving pattern monitor sensor.

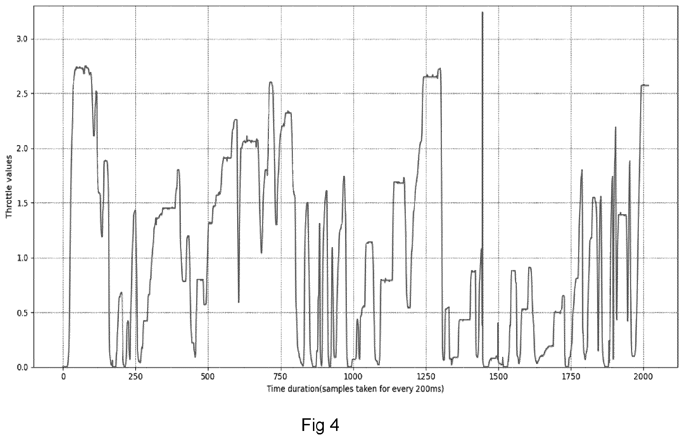

Fig 4 shows the signals logged and sent from (13) driving pattern monitor sensor to the onboard microcontroller (2), in accordance with the embodiments of the present disclosure.

### SUMMARY OF INVENTION

According to the main aspect of the invention there is provided transmission switching mechanism for a hybrid vehicle comprising: circuit having a microcontroller capable of handling multitasks in a reliable manner for a real time application (2),the said application is characterised in switching of transmission from an internal combustion engine of a hybrid vehicle to transmission by electric motor, switching of transmission from electric motor to transmission by an internal combustion engine of a hybrid vehicle, the said circuit is provided with a tilt sensor(9) connected to microcontroller (2), the said tilt sensor senses the angle of elevation of hybrid vehicle and sends signal to the microcontroller (2), the said microcontroller then actuates the first actuator (3) to ignite the spark plug (4) of an internal combustion engine of the hybrid vehicle, if the said hybrid electric vehicle is being propelled by electric motor, the said microcontroller receives signal from a connected single pole three throw switch(1), said switch (1) being connected to microcontroller, capable of bypassing fuel ignition and connecting the electric throttle through a microcontroller, the driver's decision by selecting the position of the switch communicated to said microcontroller activates internal combustion engine or electric motor to propel the vehicle, the signal from the microcontroller (2) actuates the first actuator (3) to ignite the spark plug (4) of an internal combustion engine , on bypassing the internal combustion engine the signal activates battery supply to electric motor in the hybrid vehicle.

According to another aspect of the invention there is provided voltage sensor (6), a current sensor (7) connected to the microcontroller (2), the said voltage sensor and current sensor read the battery status and send signals to the microcontroller (2), the said microcontroller actuates either the first actuator (3) or actuates the second actuator (5) based on the battery status.

According to another aspect of the invention there is provided a load sensor (10) connected to microcontroller (2), the said load sensor (10) determines the load carried by vehicle and sends signal to the microcontroller (2), based on the inputs received along with the tilt sensor (8) input, the said microcontroller analyses the amount of torque and power required by the hybrid vehicle for propulsion, the said microcontroller being provided with a neural network algorithm, the said microcontroller using neural network algorithm makes a decision as per the elevation of the hybrid vehicle to actuate the first actuator (3) thereby igniting the spark plug (4) of an internal combustion engine of the hybrid vehicle when the electric motor of hybrid vehicle is not able to provide the required amount of torque and power.

According to another aspect of the invention there is provided a (13) driving pattern monitor sensor connected to the microcontroller (2), the said driving pattern monitor sensor (13) monitors the drivers input in the form of acceleration or deceleration of the vehicle and send the signal to the microcontroller (2). Based on the inputs received and the amount if fuel present in fuel tank or energy present in the battery, the said microcontroller (2)using neural network algorithm makes a decision to actuate the first actuator (3) thereby igniting the spark plug (4) of an internal combustion engine of the hybrid vehicle when he electric motor of hybrid vehicle is not able to provide the required amount of torque and power or vice versa.

According to another aspect of the invention there is provided fuel level sensor (9) connected to microcontroller (2), the said fuel level sensor (9) senses the quantity of fuel remaining in the storage and sends signal to the microcontroller (2), the said microcontroller then actuates the alarm (11) indicating the low status of the fuel for internal combustion engine.

According to an embodiment of the present invention wherein, the alarm (11) is an audio-visual indicator.

### DETAILED DESCRIPTION

The word "exemplary" is used herein to mean "serving as an example, instance, or illustration." Any embodiment described herein as "exemplary" is not necessarily to be construed as preferred or advantageous over other embodiments. Likewise, the term "embodiments" do not require that all embodiments include the discussed feature, advantage, or mode of operation.

The terminology used herein is provided to describe particular embodiments only and is not intended to limit any embodiments disclosed herein. As used herein, the singular forms "a," "an," and "the" are intended to include the plural forms as well, unless the context clearly indicates otherwise. It will be further understood that the terms "comprises, "comprising," "includes," and/or "including," when used herein, specify the presence of stated features, steps, elements, and/or components, but do not preclude the presence or addition of one or more other features, , steps, elements, components, and/or groups thereof.

Unless defined otherwise, all technical and scientific terms used herein have the same meaning as commonly understood by one of ordinary skill in the art to which this invention belongs.

Figure 1 shows an exemplary embodiment of switching mode of the present invention where in the switch (1) placed in the appropriate position on the handle of a hybrid two-wheeler within the reach of the driver convenient to operate. The said switch (1) is capable of bypassing from electric throttle to fuel ignition for propulsion of hybrid two-wheeler or vice versa through the onboard microcontroller (2). Based upon the signal received by the switch (1), the onboard microcontroller (2) actuates the first actuator (3) or second actuator (5). The first actuator (3) ignites the spark plug (4) in order to use internal combustion engine for propulsion and the second actuator (5) switches on the electric power supply to use electric motor propulsion. In the electric propulsion mode, the motor controller gets activated thereupon supplying power to the motor by means of the battery system provided in the vehicle.

As an exemplary embodiment, when the vehicle is being propelled by an internal combustion engine of the hybrid two-wheeler the switch (1) is in initial state **"I**" where "**I**" denotes internal combustion engine. When the driver changes switch (1) to state "E" called the electric power, the signal from switch (1) picked up by the onboard microcontroller (2) which then switches off the internalcombustion engine, simultaneously actuating the second actuator (5) to switch on the power supply to the electric motor present in the hybrid vehicle so that the driver can travel without any pause for switching between the internal combustion engine or electric motor and vice versa to use the internal combustion engine.

Figure 2 shows exemplary embodiment of automated switching mode by selecting position "AUTO" of switch 1. In this preferred exemplary embodiment of the present invention where in there are provided a voltage sensor (6), a current sensor (7), a tilt sensor (8)a load sensor (10) a fuel level sensor (9) in the fuel tank and (13) driving pattern monitor sensor. The voltage sensor (6), the current sensor (7),transmit the battery status to the microcontroller (2) also shown in Fig 1 . The tilt sensor (8) transmits the gradient data of the road, the load sensor (10) transmits the load carried by the hybrid vehicle ,the fuel level sensor (9) transmit fuel level data and (13) driving pattern monitor sensor transmits the driving behaviour of the driver to the onboard microcontroller (2) also shown in Fig 1. Based on the signals received, the onboard microcontroller (2) makes a smart decision by using neural network algorithm as shown in Figure 3 to choose between internal combustion engine and electric motor for propulsion.

Referring to Figure 3, a neural network algorithm is provided. However, the decision-making mechanism may also be any of deep learning, machine learning and artificial intelligence or Al but not limited too. The neural network algorithm takes the inputs from voltage sensor (6) (also shown in Fig 2), current sensor (7) (also shown in Fig 2), tilt sensor (8)(also shown in Fig 2), fuel sensor (9)(also shown in Fig 2) and load sensor (10)(also shown in Fig 2) driving pattern monitor sensor(13) (also shown in Fig 2). Based on the inputs received, the algorithm precisely analyses the driving condition inside the computational block (12) and decides the best mode of propulsion so that higher efficiency from the hybrid vehicle can be achieved.

For instance, as an exemplary embodiment, if the hybrid vehicle is chosen to be propelled by an electric motor, and the tilt sensor senses positive gradient of the road and transmits the signal to the onboard microcontroller (2), the said, on board microcontroller (2) then calculate the torque and power required to overcome the gradient by the hybrid vehicle based on the data transmitted by the load sensor (10). At the same time fuel level sensor (9), voltage sensor (6) and current sensor (6) transmits the signals to the on-board microcontroller (2). If the electric motor is not capable to handle the amount of torque and power required to overcome the gradient then the on board microcontroller (2) switches on the internal combustion engine through a spark plug (4) by actuating the first actuator (3) and simultaneously switching off the electric motor by turning off the power supply to by actuating the second actuator (5). This allows the driver to continue the journey without pausing or stopping provided if there is enough fuel.

Fig 4 shows an exemplary output signal from driving pattern monitor sensor (13) in one test scenario. The driving pattern monitor sensor (13)is placed on the handlebar where the user gives input to the hybrid vehicle to change the speed. This instantaneous input is converted to the electric signal and sent to the onboard microcontroller (2) for taking the decision using neural network algorithm.

According to another embodiment of the present invention the on-board microcontroller (2) senses the amount of fuel present through the fuel level sensor (9) and battery status through the voltage (6) and current sensor(7). Given the condition of low fuel and low battery charge, the on-board microcontroller (2) alerts the driver through an alarm (11) indicating to either to recharge the battery or refuel or both.

In another preferred embodiment the user of the vehicle may select either a manual switch over transmission or auto switchover transmission.

While the invention describes the use of the system in a hybrid vehicle there is no limitation in its use in an internal combustion engine which uses only the load sensor, the tilt sensor, driving pattern monitor sensor and the fuel level sensor.

Further the implementation of the switching mechanism is adaptable to any of the engine configuration like, petrol, diesel, compressed natural gas, liquefied petroleum gas, hydrogen-based fuel, fuel cells.

Additionally the use of the switching mechanism is not limited to only the hybrid two-wheeler but may be used in any hybrid vehicle of any configuration like three-wheeler, four wheeler and higher configurations.

Additionally the use of the switching mechanism is not limited to only the hybrid vehicles but may be used in any non-hybrid vehicle of any fuel used alone.

## Claims

1. A transmission switching mechanism to operate hybrid vehicle comprising of Internal combustion engine and electric motor to propel, the transmission switching system comprising;
a single pole three throw switch (1) the said switch having marking position "I" called the internal combustion engine transmission, "EP" called the electric power transmission," AUTO" for automatic switching transmission,
a first actuator (3), a spark plug (4), a second actuator (5),
a microcontroller(2) receiving one or more signals from the sensors integrated on the vehicle, wherein the sensors specify the road condition, fuel status and battery status,
the sensors being a battery voltage sensor (6), a battery current sensor (7),a tilt sensor (8), a fuel sensor (9), a load sensor (10), (13) a driving pattern monitor sensor
determining the transmission mechanism for propelling the hybrid vehicle, wherein the transmission mechanism is determined based on the calculated power and torque utilising an algorithm by the microcontroller (2), and wherein the algorithm calculates the power and torque based on the angle of elevation of the road by the tilt sensor (8), load carried by the hybrid vehicle from the load sensor (10), driving pattern of the driver using driving pattern monitor sensor (13) and on factors including one or more of: battery voltage from the voltage sensor (6), battery current from the current sensor (7), quantity of fuel present from the fuel level sensor(9) of the transmission switching system,
switching the transmission according to the determined transmission mechanism specified by the algorithm, wherein the internal combustion engine is triggered by spark plug (4) through first actuator (3) and electric motor is triggered by second actuator (5), and wherein the transmission mechanism enhances the efficiency thereby reducing the carbon footprint of the hybrid vehicle,
an alarm (11), wherein the alarm is actuated when the fuel is very low alerting the driver to refuel,
an alarm (11), wherein the alarm is actuated when the battery power is very low alerting the driver to recharge the battery.

2. The transmission switching mechanism of claim 1, wherein power and torque calculated by the algorithm is the power and torque required by the hybrid vehicle for propulsion.

3. The transmission switching mechanism of claim 1, wherein the algorithm to determine the transmission mechanism is based on, but not limited to neural network, deep learning, machine learning and artificial intelligence.

4. The transmission switching mechanism of claim 1, wherein the hybrid vehicle is a two-wheeler, three-wheeler, four-wheeler and a multiple of 2 or 4 wheels.

5. The transmission switching mechanism of claims 1 and 4, wherein the hybrid vehicle is a passenger vehicle, a cargo vehicle.

6. The transmission switching mechanism as claimed in claim 1, wherein the internal combustion engine is petrol driven, diesel driven, a compressed natural gas driven, a liquefied petroleum gas driven.

7. The transmission switching mechanism as claimed in claim 1, wherein the electric motor is powered by electrical energy stored in the battery, supplied externally, generated within the hybrid vehicle.

8. The transmission switching mechanism of claim 1, wherein the alarm is an audio-visual indicator.

9. The transmission switching mechanism of claim 1, wherein the driving pattern monitor sensor (13) is but not limited to a resistive transducer, hall effect transducer, electromechanical transducer and photoelectric transducer.
